Europäisches Patentamt

European Patent Office

Office européen des brevets

(19)

(11) **EP 1 160 581 B1**

(12) **EUROPÄISCHE PATENTSCHRIFT**

(45) Veröffentlichungstag und Bekanntmachung des Hinweises auf die Patenterteilung:
**16.02.2005 Patentblatt 2005/07**

(51) Int Cl.$^7$: **G01S 3/808**, G01S 7/52

(21) Anmeldenummer: **01109902.5**

(22) Anmeldetag: **24.04.2001**

(54) **Verfahren zum Bestimmen der Einfallsrichtung von Schallwellen**

Method for determining the angle of arrival of sound waves

Procédé pour déterminer la direction d'incidence des ondes sonores

(84) Benannte Vertragsstaaten:
**AT BE CH CY DE DK ES FI FR GB GR IE IT LI LU MC NL PT SE TR**

(30) Priorität: **02.06.2000 DE 10027538**

(43) Veröffentlichungstag der Anmeldung:
**05.12.2001 Patentblatt 2001/49**

(73) Patentinhaber: **ATLAS ELEKTRONIK GmbH
28305 Bremen (DE)**

(72) Erfinder:
• **Neumeister, Dirk, Dr.
28309 Bremen (DE)**
• **Wicker, Kai, Dr.
28357 Bremen (DE)**

(56) Entgegenhaltungen:
**EP-A- 0 964 264**      **US-A- 4 488 434**

• **PATENT ABSTRACTS OF JAPAN vol. 1995, no. 11, 26. Dezember 1995 (1995-12-26) & JP 07 198819 A (TOKIMEC INC), 1. August 1995 (1995-08-01)**
• **PATENT ABSTRACTS OF JAPAN vol. 018, no. 356 (P-1765), 5. Juli 1994 (1994-07-05) & JP 06 094827 A (FURUNO ELECTRIC CO LTD), 8. April 1994 (1994-04-08)**

**Beschreibung**

Die Erfindung betrifft ein Verfahren zum Bestimmen der Einfallsrichtung von im Wasser sich ausbreitenden Schallwellen der im Oberbegriff des Anspruchs 1 definierten Gattung.

Bei einem bekannten System zur Richtungsbildung bei einer Unterwasserantenne, auch Beamforming System genannt (US 4 060 792), werden die Empfangssignale von eine sog. Linearantenne bildenden, äquidistant nebeneinander aufgereihten elektroakustischen Wandlern verstärkt, geklippt und mit einer Abtastfrequenz, die größer ist als das Zweifache der zugelassenen größten Signalfrequenz der Empfangssignale abgetastet. Die Abtastwerte oder Samples werden einem sog. Beamformer zugeführt, der zunächst die Abtastwerte um unterschiedliche definierte Verzögerungszeiten verzögert, um sie dann konphas addieren zu können. Das Ergebnis des Beamformings ist die Richtcharakteristik der Linearantenne, mit einer Hauptkeule, deren Hauptrichtung die Einfallsrichtung einer von der Unterwasserantenne empfangenen Schallwelle bestimmt, und mit Nebekeulen oder Nebenzipfel, die durch eine Amplitudenstaffelung der zeitverzögerten Samples, dem sog. Shading, z.B. durch eine Dolph-Tschebyschew-Wichtung, reduziert werden.

Bei einem bekannten Verfahren der eingangs genannten Art (DE 21 14 373 A1) werden die Empfangssignale einer Gruppe von äquidistant auf einer Zylinderbasis angeordneten elektroakustischen Wandlern verstärkt, mittels einer potentialgesteuerten Kippstufe geklippt, d.h. in eine Folge von Rechteckimpulsen umgewandelt, und in ein Schieberegister mit einer Impulsfolge einer Taktfrequenz hineingeschoben. Die Taktfrequenz wird durch das sog. Shannon-Theorem bestimmt. Das Schieberegister besteht aus einzelnen Speicherzellen, deren minimale Speicherzellenzahl bei vorgegebener Taktfrequenz durch eine maximal erwünschte Verzögerungszeit bestimmt ist. Jede Speicherzelle des Schieberegisters weist einen Ausgang zum Abgriff der um die gewünschte Verzögerungszeit (Speicherzellenzahl dividiert durch Taktfrequenz) verzögerten Rechteckimpulse auf. Außerdem werden die Empfangssignale in einen Amplitudendetektor eingespeist, der einen der Amplitude der Empfangssignale proportionalen Wert an seinen Ausgang liefert. Die Ausgangswerte des Amplitudendetektors werden mit den am Ausgang der Schieberegister abgenommenen verzögerten Rechteckimpulsen multipliziert und dann konphas aufsummiert. Das ggf. gefilterte Summensignal ist das Gruppensignal der Richtcharakteristik, die mit der Gruppe von Wandlern gebildet wird.

Ein solches Verfahren der Richtcharakteristikbildung bzw. des linearen Beamformings hat den Nachteil, daß schwache kohärente Empfangssignale durch die Festlegung einer Schwelle beim Klippen der Empfangssignale unterdrückt werden, während störende Rauschsignale größerer Amplitude herausgehoben werden und das Gruppensignal der Richtcharakteristik liefern. Daher werden schwache Schallquellen unterdrückt und somit nicht detektiert, sowie die Falschalarmrate erhöht.

Ein weiteres Verfahren gemäß dem Oberbegriff von Anspruch 1 ist aus der US 4 488 434 bekannt.

Der Erfindung liegt die Aufgabe zugrunde, bei einem Verfahren der eingangs genannten Art bei geringem Signal-Rausch-Verhältnis die Richtungsbildung mit genauerer Erfassung der Einfallsrichtung von Schallwellen zu verbessern und das Detektionsvermögen der Antenne zu erhöhen.

Die Aufgabe ist erfindungsgemäß durch die Merkmale im Anspruch 1 gelöst.

Das erfindungsgemäße Verfahren hat den Vorteil, daß durch die Anwendung einer nichtlinearen, monotonen Funktion mit Stauchung des Wertebereichs auf die einzelnen Empfangsignale deren Pegel im Bereich des Nulldurchgangs stärker angehoben und damit schwache Signale stärker herausgehoben werden. Eine vom Nutz/Störverhältnis abhängige Schwelle zum Detektieren des Nulldurchgangs des Signals wird nicht benötigt. Die durch die Schwelle bedingte Beeinflussung der Lage des Nulldurchgangs entfällt und verfälscht nicht die Zeitverzögerung oder Phasenverschiebung der Empfangssignale, so daß allein von der gleichen Schallquelle empfangene kohärente Empfangssignale auch mit geringem Pegel in die Summenbildung zum Gruppensignal der Richtcharakteristik eingehen. Das anschließende Potenzieren macht die Pegelkompression wieder rückgängig und verstärkt die Pegelunterschiede der Gruppensignale. Durch diese Signalverarbeitung wird auch bei geringem Signal/Rauschverhältnis (S/N-Verhältnis) die Bündelung der Richtcharakteristik, also die 3dB-Breite der Hauptkeule der Richtcharakteristik, verbessert und Nebenkeulen oder Nebenzipfel stärker gedämpft. Ein weiterer Vorteil besteht darin, daß diese Signalverarbeitung für jede Antennenkonfiguration eingesetzt, unabhängig vom vorhandenen Richtungsbildner nachgerüstet oder wahlweise als Alternative in den vorhandenen Signalverarbeitungsweg eingeschaltet oder zusätzlich vorgesehen werden kann.

Darüber hinaus ist es durch das erfindungsgemäße Verfahren möglich, kleine Antennenkonfigurationen, beispielsweise Zylinderbasen mit einem Durchmesser im Größenbereich der Schallwellenlänge, zur Detektion von Schallquellen mit Schallabstrahlung im Niederfrequenzbereich zu verwenden, was das erfindungsgemäße Verfahren für die Anwendung bei Torpedosonaren besonders geeignet macht.

Zweckmäßige Ausführungsformen des erfindungsgemäßen Verfahrens mit vorteilhaften Weiterbildungen und Ausgestaltungen der Erfindung ergeben sich aus den weiteren Ansprüchen.

Gemäß einer bevorzugten Ausführungsform der Erfindung wird als nichtlineare Funktion eine Wurzelfunktion verwendet, deren Umkehrfunktion die Potenzfunktion ist, wobei der Wurzelexponent größer 1 ist. Bereits ein Wurzelexponent n = 2 erbringt eine wesentliche Verbesserung der Richtcharakteristik, die durch Vergrößerung des Wurzelexponenten in Grenzen gesteigert werden kann. Durch die Wahl des Wurzelexponenten läßt sich die Stärke der Nichtlinearität an die Aufgabenstellung anpassen, wobei für n >> 1 ein Effekt nahe des Klippens erreicht wird, ohne daß eine Schwelle vorgegeben werden muß.

Gemäß einer vorteilhaften Ausführungsform der Erfindung werden die Empfangssignale der Gruppe der gemeinsam betriebenen Wandler mit einer konstanten Abtastfrequenz abgetastet und die Richtungsbildung durch Zeitverzögerung und Addition sowie die Rechenoperationen der nichtlinearen Funktion und deren Umkehrfunktion auf die Abtastwerte oder Samples der Empfangssignale angewendet. Die Summen der so behandelten, einander zugehörigen Abtastwerte der Empfangssignale werden zu dem Gruppensignal zusammengesetzt. Aus der Vielzahl der gebildeten Gruppensignale, die entweder durch Anwendung des Verfahrens auf von verschiedenen Wandlergruppen gelieferten Empfangssignalen (elektronisches Schwenken bei Zylinderbasis) oder durch unterschiedliche Zeitverzögerungen der Empfangssignale der gleichen Wandlergruppe (elektronisches Schwenken bei Linearantenne) entstehen, bestimmt das Gruppensignal mit dem größten Pegel die Richtcharakteristik der Empfangsantenne, deren Hauptrichtung in Einfallsrichtung der Schallwellen weist.

Die Erfindung ist anhand eines in der Zeichnung illustrierten Ausführungsbeispiels im folgenden näher beschrieben. Es zeigen:

Fig. 1 eine schematische Darstellung einer Draufsicht einer Zylinderbasis mit 21 elektroakustischen Wandlern zur Illustrierung der verschiedenen Wandlergruppen mit gemeinsam betriebenen elektroakustischen Wandlern,

Fig. 2 eine schematische Darstellung einer Draufsicht einer Linearantenne mit 9 elektroakustischen Wandlern zur Illustrierung des elektronischen Schwenkens der Richtcharakteristik der Linearantenne,

Fig. 3 ein Blockschaltbild einer Schaltungsanordnung zur Illustrierung des Verfahrens zum Bestimmen der Einfallsrichtung von Schallwellen mit der akustischen Empfangsantenne gemäß Fig. 1 oder 2,

Fig. 4 jeweils eine Darstellung einer Richtcharakteristik der Empfangsantenne in Fig. 1 in Polarkoordinaten bei der Anwendung herkömmlicher (linearer) Verfahren der Richtungsbildung (links im Bild) und bei Anwendung des erfindungsgemäßen (nichtlinearen) Verfahrens (rechts im Bild) für drei verschiedene Frequenzbereiche der einfallenden Schallwellen,

Fig. 5 eine gleiche Darstellung wie in Fig. 4 für weitere drei verschiedene Frequenzbereiche der einfallenden Schallwellen.

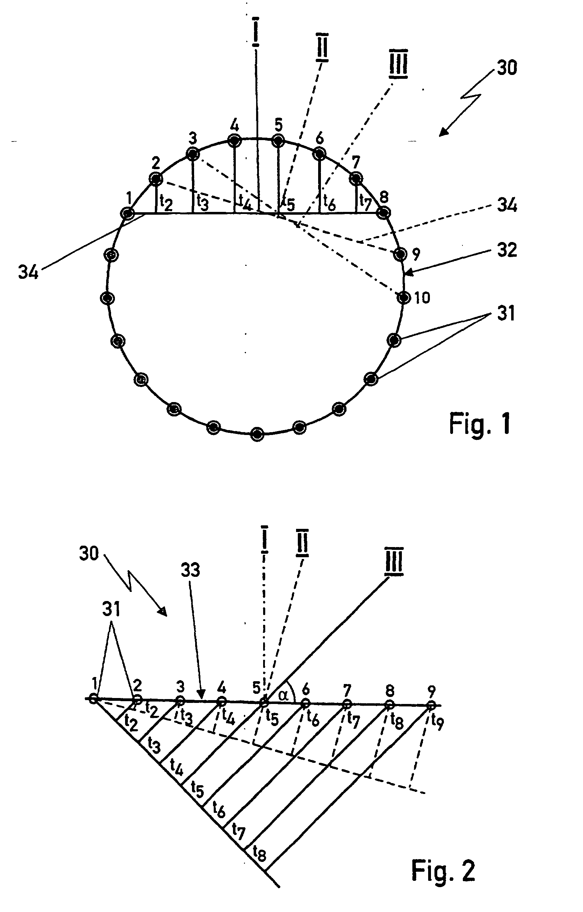

Bei dem nachfolgend beschriebenen Verfahren zum Bestimmen der Einfallsrichtung von im Wasser sich ausbreitenden Schallwellen, die von einer oder mehreren Schallquellen abgestrahlt werden, wird eine elektroakustische Empfangsantenne 30 verwendet, die entfernt von den Schallquellen im Wasser angeordnet ist. Im Ausführungsbeispiel der Fig. 1 ist die Empfangsantenne 30 eine sog. Zylinderbasis 32 mit im Ausführungsbeispiel einundzwanzig Wandlern 31, die äquidistant in Umfangsrichtung auf einer Kreislinie angeordnet sind. Wie nicht weiter dargestellt ist, sind zur Erzielung einer vertikalen Bündelung der Empfangsantenne 30, d. h. eines möglichst kleinen vertikalen Öffnungswinkels der Zylinderbasis 32, mehrere in Achsrichtung der Zylinderbasis 32 vertikal äquidistant untereinanderliegende Wandler zu einem sog. Stave zusammengefaßt. Jeder der einundzwanzig Wandler 31 in Fig. 1 gehört damit zu einem Stave. Jeweils eine Gruppe von Wandlern 31, im Ausführungsbeispiel der Fig. 1 jeweils acht Wandler 31 bzw. Staves, werden gemeinsam betrieben. Durch eine noch zu beschreibende Signalverarbeitung der Empfangssignale der elektroakustischen Wandler 31 einer Gruppe von gemeinsam betriebenen Wandlern 31 hat die Wandlergruppe eine Richtcharakteristik, deren Hauptrichtung mit I gekennzeichnet ist. Diese Richtcharakteristik der Wandlergruppe, auch Gruppencharakteristik genannt, wird zur horizontalen Abtastung der Antennenumgebung elektronisch geschwenkt, wobei durch Hinzufügen und Wegnehmen eines Wandlers 31 in der Wandlergruppe die Hauptrichtung der Richtcharakteristik horizontal um 360° gedreht werden kann. Die durch dieses sog. elektronische Schwenken sich verlagernde Richtcharakteristik der Empfangsantenne 30 ist in Fig. 1 beispielhaft bezüglich ihrer Hauptrichtung mit II und III gekennzeichnet.

In Fig. 2 ist eine Linearantenne 33 mit neun elektroakustischen Wandlern 31 dargestellt. Auch hier hat die Gruppe aller gemeinsam betriebenen Wandler 31 eine Richtcharakteristik, deren Hauptrichtung senkrecht auf der Wandleranordnung steht und in Fig. 2 mit I gekennzeichnet ist. Diese Hauptrichtung,der Richtcharakteristik läßt sich durch eine geeignete Signalverarbeitung elektronisch schwenken, so daß die Hauptrichtung der Richtcharakteristik unter einem spitzen Winkel $-90° < \alpha < +90°$ zur Antennenanordnung liegt. Zwei Beispiele der Hauptrichtung bei geschwenkter Richtcharakteristik sind in Fig. 2 mit II und III gekennzeichnet. Selbstverständlich ist es auch möglich, diese Hauptrichtungen II und III der Richtcharakteristik der Linearantenne 33 durch mechanisches Drehen der Wandleranordnung zu erzielen. Zur Verkleinerung des vertikalen Öffnungswinkels der Richtcharakteristik kann die Linearantenne 33 als Flächenantenne ausgebildet werden, wozu jeder der elektroakustischen Wandler 31 durch weitere vertikal untereinander äquidistant angeordnete elektroakustische Wandler zu einem sog. Stave ergänzt wird.

Eine von einer Schallquelle abgestrahlte Schallwellenfront läuft über die einzelnen Wandler hinweg, und die gemeinsam betriebenen Wandler 31 einer Wandlergruppe liefern an ihrem Ausgang ein entsprechendes elektrisches Ausgangssignal, das im folgenden als Empfangssignal bezeichnet wird. Um die Einfallsrichtung der Schallwellenfront zu bestimmen, wird eine Signalverarbeitung der Empfangssignale durchgeführt, das zusammengefaßt wie folgt abläuft:

Die Empfangssignale $s_j$ (t) der gemeinsam betriebenen j Wandler 31 der Wandlergruppe (Fig. 1 : j=1 bis j=8) werden um die Verzögerungszeiten $t_j$ zeitverzögert und konphas aufaddiert. Wie aus Fig. 1 hervorgeht, ergeben sich dabei die Zeitverzögerungen $t_1$ bis $t_8$ in bekannter Weise aus der Wegstrecke, die die Schallwellenfront von der räumlichen Lage des jeweiligen Wandlers 31 bis zur Projektion des Wandlers 31 auf der Sehne 34 zurücklegt. Vor der konphasen Addition der zeitverzögerten Empfangssignale $s_j$ (t-$t_j$) wird auf jedes Empfangssignal eine nichtlineare Funktion, die den Wertebereich staucht, angewendet und auf das durch die konphase Addition der Empfangssignale entstandene gestauchte Gruppensignal $S_k$ (k) zu dessen Entzerrung die Umkehrfunktion der nichtlinearen Funktion angewendet. Ein jeweils vor der jeweiligen Rechenoperation vorhandenes Vorzeichen der Empfangssignale bzw. des gestauchten Gruppensignals wird nach der Durchführung der jeweiligen Rechenoperation wieder hinzugefügt.

Als nichtlineare Funktion kann jede Funktion benutzt werden, die streng monoton ist und den Wertebereich staucht, um Amplitudenunterschiede zu vermindern. Diese Forderungen erfüllen beispielsweise die Logarithmusfunktion $f(x) = \log_a x$ mit der Umkehrfuntion $f'(x) = a^x$ sowie die Wurzelfunktion

$$g(x) = \sqrt[n]{x}$$

mit der Umkehrfunktion $g'(x) = x^n$. In dem beschriebenen Ausführungsbeispiel wird als nichtlineare Funktion die Wurzelfunktion und deren Potenzfunktion als Umkehrfunktion verwendet, wobei der Wurzelexponent n größer 1 ist. Mathematisch ausgedrückt ergibt sich für das gestauchte Gruppensignal $S_k(t)$ durch Addition der Beträge der zeitverzögerten Empfangssignale $s_j(t-t_j)$ bei gleichzeitiger Sicherung des Vorzeichens der Empfangssignale

$$\hat{S}_k(t) = \frac{1}{m} \sum_{j=1}^{M} \left| s_j(t - t_j) \right|^{\frac{1}{n}} \cdot \operatorname{sign} s_j(t - t_j) \tag{1}$$

Das so gebildete gestauchte Gruppensignal wird durch Potenzieren mit dem Wurzelexponenten n wieder entzerrt und gleichzeitig das Vorzeichen des Gruppensignals gesichert. Das rekonstruierte Gruppensignal $S_k(t)$ hat danach die Form

$$\hat{S}_k(t) = |\hat{S}_k(t)|^n \cdot \operatorname{sign} \hat{S}_k(t) \tag{2}$$

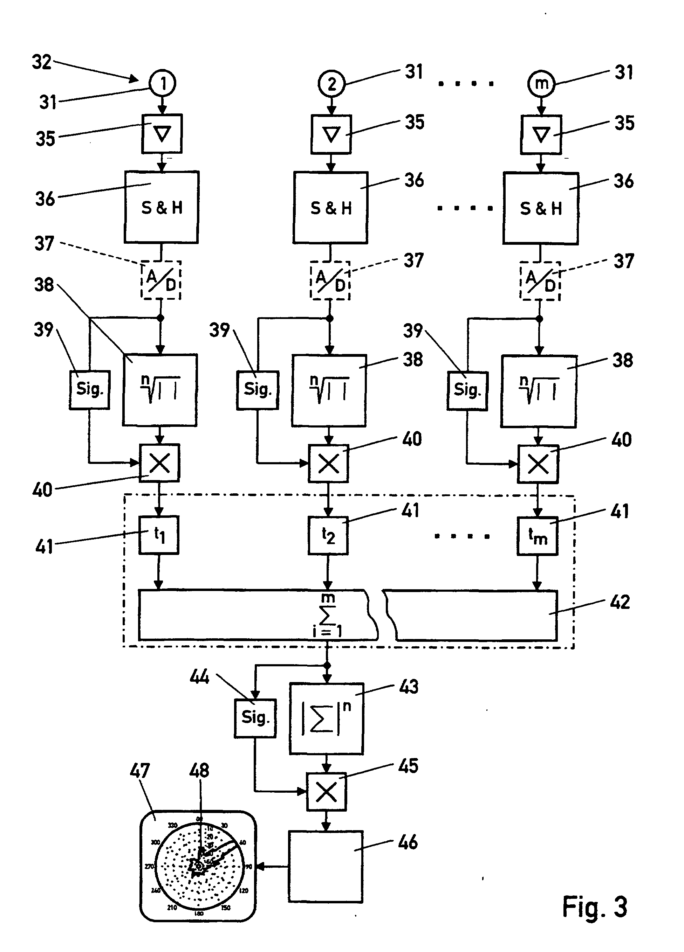

Im einzelnen werden folgende Verfahrensschritte durchgeführt, die anhand des Blockschaltbilds in Fig. 3 nachstehend erläutert werden:

Die Empfangssignale der m zu einer Wandlergruppe zusammengefaßten, gemeinsam betriebenen elektroakustischen Wandler 31 werden verstärkt und abgetastet. Hierzu ist ein Verstärker 35 und eine Abtasteinheit 36 (Sample and Hold-Schaltung) vorgesehen. Die Abtastfrequenz beträgt ein Vielfaches der zugelassenen maximalen Frequenz der Empfangssignale. Im Falle einer digitalen Signalverarbeitung werden die Abtastwerte oder Samples mittels eines Analog-Digital-Wandlers 37 digitalisiert. In einem Radizierblock 38 wird aus den Beträgen der Samples die n-te Wurzel gezogen und im Signumblock 39 das Vorzeichen der Samples gesichert, das mittels eines Multiplizierers 40 den am Ausgang des Radizierblocks 38 abgenommenen radizierten Beträgen der Samples wieder hinzugefügt wird. Die durch diese Rechenoperation verzerrten Samples werden in einem Zeitverzögerungsglied 41 um eine definierte Verzögerungszeit $t_j$ verzögert und dann einem Summierer 42 zugeführt.

Wie aus dem Blockschaltbild der Fig. 3 hervorgeht, wird dieser Vorgang auf die Empfangssignale eines jeden elektroakustischen Wandlers 31 der Wandlergruppe angewandt, wobei in Übereinstimmung mit Fig. 1 die Wandler in Fig. 3 mit den Nummern 1, 2..... m belegt sind. Die in den Verzögerungsgliedern 41 jeweils eingestellte Verzögerungszeit ist entsprechend $t_1$, $t_2$ bis $t_m$ und wird gemäß Fig. 1 festgelegt. Im Summierer 42 werden die verzerrten Samples konphas und vorzeichenrichtig aufaddiert, wobei jeweils die Summe über die einander zugeordneten verzerrten Samples der m Empfangssignale gebildet wird. Die im Summierer 42 gebildete Summe wird zur Entzerrung einem Potenzierblock 43 zugeführt, in dem der Betrag der Summe mit dem Wurzelexponenten n potenziert wird, und gleichzeitig wird das Vorzeichen der Summe in dem Signumblock 44 abgespeichert und dann mittels eines Multiplizierers 45 dem potenzierten Betrag der Summe wieder hinzugefügt. In einem Signalaufbereiter 46 werden die einzelnen entzerrten Summen zum Gruppensignal zusammengesetzt. Dieses Gruppensignal bildet die Richtcharakteristik der Wandlergruppe, bestehend aus den gemeinsam betriebenen Wandlern 1 - 8, die auch Gruppencharakteristik genannt wird.

Die vorstehend beschriebenen Verfahrensschritte werden nunmehr auf die Empfangssignale der nächsten Wandlergruppe, bestehend aus den Wandlern 2 - 9 der dritten Wandlergruppe, bestehend aus den Wandlern 3 - 10, usw. angewendet, bis die Hauptrichtung der Gruppencharakteristiken I, II, III usw. über das Panorama von 360° horizontal geschwenkt worden ist. Aus dieser Vielzahl der Gruppensignale ermittelt die Aufbereitungseinheit 47 das Gruppensignal mit dem größten Empfangspegel, das als Richtcharakteristik 48 der Empfangsantenne 10 in Polarkoordinaten auf einer Anzeigeeinheit 47 dargestellt wird. Selbstverständlich ist es auch möglich, die Samples erst entsprechend zeitlich zu verzögern und dann aus den Beträgen der verzögerten Samples die n-te Wurzel bei gleichzeitiger Vorzeichensicherung zu ziehen.

Das gleiche Signalverarbeitungsverfahren kann auch auf die Empfangswandler 31 der Linearantenne 33 gemäß Fig. 2 angewendet werden. Hier besteht die Wandlergruppe immer aus der Gesamtheit der neun gemeinsam betriebenen Wandler 31. Das elektronische Schwenken der Richtcharakteristik der Linearantennte 33 erfolgt durch Änderung der individuellen Verzögerungszeiten für die Empfangssignale der Wandler 31, die sich gemäß Fig. 2 aus den Laufzeiten der aus einer Hauptrichtung I bzw. II bzw. III einfallenden Schallwellenfront zwischen der räumlichen Lage der Wandler 31 und der Wandlerprojektion auf einer rechtwinklig zur Hauptrichtung durch den ersten Wandler 31 verlaufenden Projektionslinie 49 ergeben.

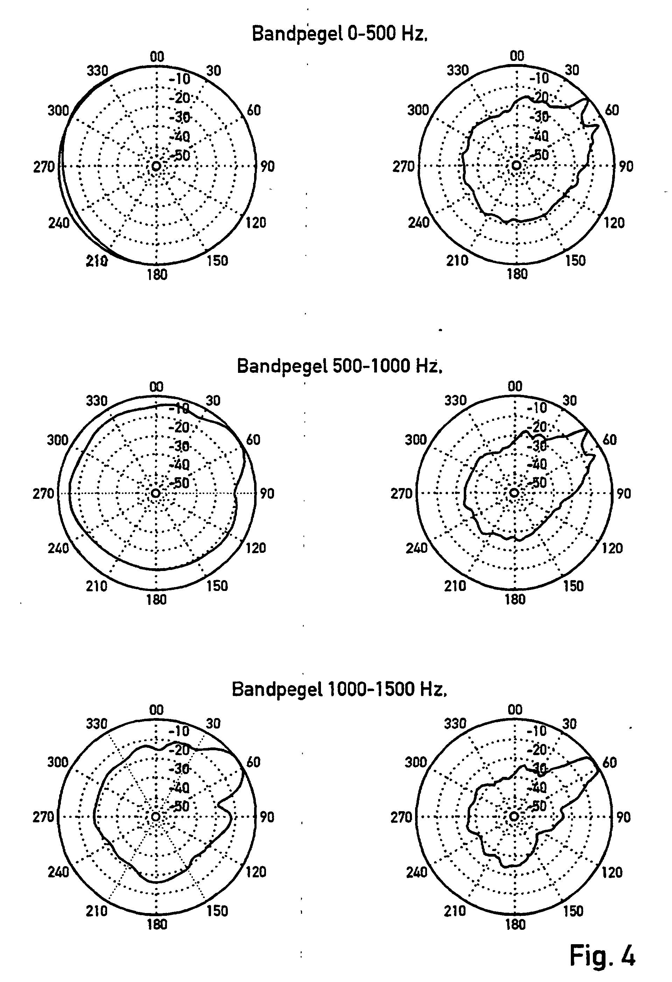

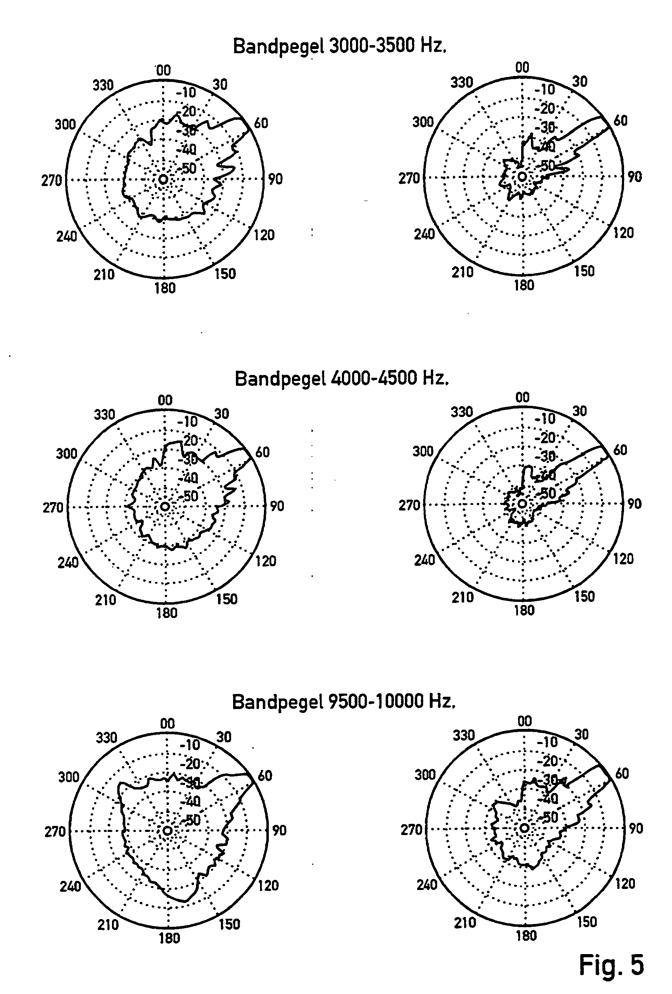

In Fig. 4 und 5 sind Beispiele für in der Anzeigeeinheit 47 in Polarkoordinaten dargestellte Richtcharakteristiken der als Zylinderbasis 32 ausgebildeten Empfangsantenne 30 gemäß Fig. 1 dargestellt, und zwar für verschiedene Frequenzbänder der einfallenden Schallwellen. Dabei sind in Fig. 4 und 5 links im Bild die Richtcharakteristiken der Zylinderbasis bei einer herkömmlichen Signalverarbeitung mit herkömmlicher Richtungsbildung dargestellt, während rechts in Fig. 4 und 5 die Richtcharakteristiken dargestellt sind, die sich mit dem erfindungsgemäßen Verfahren bei Anwendung der Wurzelfunktion und deren Umkehrfunktion mit dem Wurzelexponenten n = 2 ergeben.

Wie in den oberen beiden Richtcharakteristiken in Fig. 4 deutlich zu erkennen ist, wird mit dem erfindungsgemäßen Verfahren bereits in einem unteren Frequenzband ein Ziel detektiert, in dem die Empfangsantenne mit der herkömmlichen Richtungsbildung "blind" ist. Mit zunehmender Frequenz der einfallenden Schallwellen wird die Richtcharakteristik der Empfangsantenne 30 in beiden Fällen zunehmend verbessert und die Hauptkeule der Richtcharakteristik, die die Richtung der einfallenden Schallwellen definiert schmaler, so daß die Bestimmung der Einfallsrichtung verbessert wird. Der Vergleich der Darstellungen zeigt jedoch durch das erfindungsgemäße Verfahren deutlich verbesserte Richtcharakteristiken der Empfangsantenne bei denen die Bündelung der Hauptrichtung oder Hauptkeule sehr viel stärker ist und die Nebenkeulen oder Nebenzipfel stärker gedämpft sind. Eine relativ genaue Detektion der Schallquellen ist bereits bei Schallfrequenzen im unteren Frequenzbereich möglich, in dem die Wellenlängen der Schallwellen im Bereich der Abmessungen der Empfangsantenne liegen. Angemerkt sei hier, daß bei den in Fig. 4 und 5 dargestellten Richtcharakteristiken die Zylinderbasis einen Durchmesser von ca. 3 m aufweist und rundum mit sechsundneunzig Wandlern 31 besetzt ist.

**Patentansprüche**

1. Verfahren zum Bestimmen der Einfallsrichtung von im Wasser sich ausbreitenden Schallwellen mittels einer eine Mehrzahl von elektroakustischen Wandlern (31) aufweisenden, akustischen Empfangsantenne (30), bei dem fortlaufend die Empfangssignale einer Gruppe von gemeinsam betriebenen Wandlern (31) zur Bildung eines die Richtcharakteristik der Wandlergruppe bestimmenden Gruppensignals zeitverzögert und konphas aufaddiert werden und als Einfallsrichtung die Hauptrichtung der Richtcharakteristik des Gruppensignals mit dem größten Empfangspegel angegeben wird, wobei vor der Addition auf die Empfangssignale eine nichtlineare Funktion, die den Wertebereich staucht, und nach der Addition auf das durch die Addition entstandene, gestauchte Gruppensignal zu dessen Entzerrung die Umkehrfunktion der nichtlinearen Funktion angewendet wird, **dadurch gekennzeichnet, daß** dabei jeweils ein vor der Stauchung bzw. Entzerrung vorhandenes Vorzeichen nach der Durchführung der Stauchung bzw. Entzerrung wieder hinzugefügt wird.

2. Verfahren nach Anspruch 1, **dadurch gekennzeichnet, daß** die nichtlineare Funktion auf die zeitlich verzögerten oder unverzögerten Empfangssignale angewandt wird.

3. Verfahren nach Anspruch 1 oder 2, **dadurch gekennzeichnet, daß** als nichtlineare Funktion eine Wurzelfunktion

$$g(x) = \sqrt[n]{x}$$

, deren Umkehrfunktion die Potenzfunktion $g'(x) = x^n$ ist, angewendet wird, wobei der Wurzelexponent (n) größer 1 ist.

**4.** Verfahren nach einem der Ansprüche 1 - 3, **dadurch gekennzeichnet, daß** die Empfangssignale mit einer konstanten Abtastfrequenz abgetastet und die Zeitverzögerung und Addition sowie die Rechenoperationen der nichtlinearen Funktion und deren Umkehrfunktion auf die Abtastwerte angewendet werden.

**5.** Verfahren nach Anspruch 3 und 4, **dadurch gekennzeichnet, daß** die Beträge der Abtastwerte radiziert und die den Abtastwerten zugehörigen Vorzeichen den radizierten Beträgen der Abtastwerte wieder hinzugefügt werden und daß der Betrag der Summe der vorzeichenrichtig addierten Beträge der Abtastwerte mit dem Wurzelexponenten (n) potenziert und das vor dem Potenzieren vorhandene Vorzeichen der Summe dem in die Potenz erhobenen Betrag der Summe wieder hinzugefügt wird.

## Claims

**1.** Method for determination of the incidence direction of sound waves which are propagating in water, by means of an acoustic receiving antenna (30) which has a plurality of electroacoustic transducers (31), in which the received signals from an array of jointly operated transducers (31) are delayed progressively in order to form an array signal which determines the directivity characteristic of the transducer group, and are added up in phase, and the main direction of the directivity characteristic of the array signal having the greatest received level is indicated as the incidence direction, with a non-linear function which compresses the value range being applied to the received signals before the addition process and with the reciprocal function of the non-linear function being applied to the compressed array signal, which is produced by the addition, after the addition in order to equalize it, **characterized in that** a mathematical sign which was present before the compression and equalization is in each case added again once the compression and equalization have been carried out.

**2.** Method according to Claim 1, **characterized in that** the non-linear function is applied to the delayed or undelayed received signals.

**3.** Method according to Claim 1 or 2, **characterized in that** a root function

$$g(x) = \sqrt[n]{x}$$

, whose reciprocal function is the power function $g'(x) = x^n$, is applied as the non-linear function, with the root exponent (n) being greater than 1.

**4.** Method according to one of Claims 1 - 3, **characterized in that** the received signals are sampled at a constant sampling frequency, and the delay and addition as well as the computation operations for the non-linear function and for its reciprocal function are applied to the sample values.

**5.** Method according to Claims 3 and 4, **characterized in that** the magnitudes of the sample values have the roots extracted, and the mathematical signs which are associated with the sample values are added to the magnitudes of the sample values from which the roots have been extracted once again, and **in that** the magnitude of the sum of magnitudes of the sample values which have been added with the correct mathematical signs have the root exponent (n) added as a power term, and the mathematical sign which existed before the exponentiation for the sum is once again added to the magnitude of the sum whose power has been raised.

## Revendications

**1.** Procédé pour déterminer le sens d'incidence d'ondes sonores qui se propagent à la surface de l'eau au moyen d'une antenne de réception acoustique (30) présentant une pluralité de transducteurs électroacoustiques (31), avec lequel les signaux reçus d'un groupe de transducteurs (31) fonctionnant ensemble sont continuellement retardés dans le temps et additionnés en phase en vue de former un signal de groupe qui détermine la caractéristique directionnelle du groupe de transducteurs et la direction principale de la caractéristique directionnelle du signal de groupe ayant le niveau de réception le plus élevé est indiquée comme sens d'incidence, une fonction non linéaire qui comprime la plage de valeurs étant appliquée avant l'addition sur les signaux reçus et la fonction inverse de la fonction non linéaire après l'addition sur le signal de groupe comprimé obtenu par l'addition en vue de son égalisation, **caractérisé en ce qu'**un signe présent avant la compression ou l'égalisation est à chaque fois de nouveau ajouté après l'exécution de la compression ou de l'égalisation.

**2.** Procédé selon la revendication 1, **caractérisé en ce que** la fonction non linéaire est appliquée sur les signaux reçus retardés dans le temps ou non retardés.

**3.** Procédé selon la revendication 1 ou 2, **caractérisé en ce que** la fonction non linéaire utilisée est une fonction de racine

$$g(x) = \sqrt[n]{x}$$

dont la fonction inverse est la fonction de puissance $g'(x) = x^n$, l'exposant de la racine (n) étant supérieur à 1.

**4.** Procédé selon l'une des revendications 1 à 3, **caractérisé en ce que** les signaux reçus sont échantillonnés avec une fréquence d'échantillonnage constante et le retard dans le temps et l'addition ainsi que les opérations de calcul de la fonction non linéaire et de sa fonction inverse sont appliquées sur les valeurs échantillonnées.

**5.** Procédé selon la revendication 3 ou 4, **caractérisé en ce que** les montants des valeurs échantillonnées sont soumis à une extraction de racine et les signes correspondant aux valeurs échantillonnées sont de nouveau ajoutés aux montants des valeurs échantillonnées après extraction de la racine et que le montant de la somme des montants des valeurs échantillonnées additionnés avec les bons signes est élevé à la puissance de l'exposant de la racine (n) et le signe de la somme présent avant l'élévation à la puissance est de nouveau ajouté au montant de la somme obtenu dans l'élévation à la puissance.

Fig. 1

Fig. 2

Fig. 3

Bandpegel 0-500 Hz.

Bandpegel 500-1000 Hz.

Bandpegel 1000-1500 Hz.

Fig. 4

## Bandpegel 3000-3500 Hz.

## Bandpegel 4000-4500 Hz.

## Bandpegel 9500-10000 Hz.

Fig. 5